# EUROPEAN PATENT SPECIFICATION

(11) **EP 3 164 016 B1**
(45) Date of publication and mention of the grant of the patent: **02.05.2018**
(21) Application number: 15748303.3
(22) Date of filing: 26.06.2015
(51) Int. Cl.: A23L 5/00

(54) **NUTRITIONAL SUPPLEMENTARY COMPOSITION WITH CURATIVE EFFECT CONTAINING RICE BRAN**
NAHRUNGSERGÄNZUNGSZUSAMMENSETZUNG MIT HEILENDER WIRKUNG MIT REISKLEIE
COMPOSITION DE COMPLÉMENT NUTRITIONNEL AVEC EFFET CURATIF CONTENANT DU SON DE RIZ

(30) Priority: 03.07.2014 HU P1400343
(43) Date of publication of application: 10.05.2017
(73) Proprietor: Szántó, Emil, 1125 Budapest (HU)
(72) Inventor: Szántó, Emil, 1125 Budapest (HU)
(74) Representative: Varnai, Aniko
(86) International application number: PCT/HU2015/000057
(87) International publication number: WO 2016/001694

(56) References cited:
- EP-A1- 0 993 777
- WO-A1-94/12054
- US-A1- 2006 093 720
- US-B2- 6 737 089

## Description

The invention relates to nutritional supplementary composition with curative effect containing rice bran.
The composition is applicable for maintaining healthy status of the organism and for mitigation, as well as for prevention of some diseases of digestive organs.
The invention relates as well to the use of the above composition in human beings to mitigate or to inhibit of symptoms caused by sodium-glutamate.
Rice bran is a material well-known owing to its advantageous physiological effects, similarly to the bran sorts of the other cereals, and it can be applied as diet supplement owing to its content of dietetic fibers, as well as vitamin and micro-element contents.
Rice bran is also applied for the treatment or prevention of a number of diseases e. g. in case of diabetes, hypertension, high cholesterol level or tumorous diseases of digestive organs, as well as for prevention of cardiovascular diseases and renal calculus.
It is proven that the oil content of rice bran reduces LDL cholesterol concentration and it does not influence triglyceride level and HDL cholesterol concentration at the same time.
Rice bran has significant glutamic acid decarboxylase content suitable for transformation of added glutamate to gamma-amino butyric acid (GABA) even under extracellular circumstances, and so it is applicable for the preparation of such preparations and diet supplements, which are applicable for mitigating statuses of gamma-amino butyric acid deficiency.
The Japanese patent description of number JP 1156276 describes an edible rice bran containing preparation.
The Korean patent description of number KR20040070688 discloses a preparation containing rice bran treated with lactobacillus and it is applicable for treatment of a number of diseases, e. g. hypertension, and cardio-vascular diseases.
A great number of publications of the special literature deal with the so-called "Chinese restaurant syndrome", which can be accompanied with reddening of face, perspiration, violent palpitation, headache and increase of asthmatic symptoms.
It is supposed that the high sodium glutamate content of the Chinese foods causes the above mentioned ensemble of symptoms (Jinap S., Hajbe P.: "Glutamate. Its applications in food and contribution to health", Appetite 55, (2010), p 1 to 10).
Increased quantity of sodium glutamate is applied, however, not only in Chinese foods, but it is present in a variety of ready-made sauces and other ready-made foods being in commerce, as taste enhancing agent, as well.
The sodium glutamate content is high also in some vegetable sorts, furthermore in some sorts of meat, fish and cheese, as well.
The consumption of food products of high sodium glutamate content results in undesired symptoms for people sensitive to that.
During our experiments we got the experience that a rice bran preparation containing glutamic acid decarboxylase enzyme can be applicable under appropriate conditions also for mitigation of symptoms of digestive organs connected with increased glutamate level of the organism, including the mitigation of the so-called "Chinese restaurant syndrome", as well.

We established, however, during our experiments, that the sole intake of the effective quantity of rice bran is not sufficient in itself to reach the desired result, but, in order to reduce effectively the glutamate level, it is necessary to add further additives, among others milled (or ground) dried pea-shell, pea bran or milled grape-stone, enhancing the expected biological effect in an unexpected extent.

The dried pea shells can be those of sugar-pea (P. sativum L. ssp sativum convar. saccharatum Ser.) shelled pea (P. sativum L. ssp. sativum convar, sativum) or shells of marrowfat pea (P. sativum L. ssp sativum convar, medullare Alef.).
The additives such as sesame-seed oil, antioxidants calcium carbonate, as well as vitamin B added to the mixture can contribute to the improvement of the favorable effect.
Glutamic acid decarboxylase released from rice bran getting into digestive tract decomposes glutamate molecules. The active substances of the added milled product or pressed juice of pea shells, as well as those of pea bran improve the effectiveness of decarboxylase enzyme activity through their own enzyme activity.
The effectiveness of the preparation can be improved furthermore by adding milled grape-seeds, which, in addition to its known advantageous effect, also supports the activity of decarboxylase enzyme of the rice bran.
Adding sesame-seed oil, antioxidants, calcium carbonate and vitamin B improves further the effectiveness of the preparation.
The invention relates to nutritional supplementary composition with curative effect containing rice bran.
The composition contains 70.0 to 99.5 mass parts of rice bran, 0.1 to 25 mass parts of ground dried pea shells, 0.1 to 10 mass parts of pea bran, furthermore in given case 1 to 10 mass parts of milled grape-seeds and/or 0.1 to 1 mass parts of sesame seed oil and/or 0.5 to 1 mass parts of calcium carbonate and/or 0.01 to 0.05 mass parts of antioxidant, advantageously vitamin E and/or 0.01 to 0.05 mass parts of vitamin B6 and optionally binding, auxiliary and coating materials generally used in food industry.
The invention as well relates to the use of the above composition for use in a method of mitigating or inhibiting symptoms caused by sodium-glutamate in human beings.

A binding material, eg. carboxy-methyl cellulose can be applied as auxiliary material.
Filling materials, e.g. starch can also be applied as auxiliary material.
An essence e. g. of lemon or orange flavor can be used as flavoring agent.
The surface of the tablets can also be coated with a coating polymer used in the food industry, e.g. with methacrylates or cellulose derivatives.
In the process of preparing the preparation the required quantities of components are mixed together to a homogenous mixture in a mixing apparatus and dosing units applicable to oral application are formed.
The shape of the preparation can be tablet, coated tablet or capsule.
The dimensions of the dosing units are adjusted to those of a tablet or capsule, which can be easily swallowed.
The recommended daily dose of the preparation is 10 to 80 g, which can be accomplished by taking in one or more dosing units by dosing one or more times per day.

Some possible methods for making the preparation according to the invention are described in the following examples.

### Example 1

75 mass parts of rice bran, 20 mass parts of ground dried pea shells and 5 mass parts of pea bran are dosed into an apparatus having a mixer.

The mixture is homogenized in the mixer then tablets are pressed from the mixture.

Ground pea shells are prepared in such a way that the pea shells are submitted to intensive washing several times, then water is let fall in drops, the pea shells are dried at room temperature then ground product is made from the dry shells in a milling apparatus.

### Example 2

90 mass parts of rice bran is dosed into an apparatus provided with mixer, 9 mass parts of dried ground marrow-fat pea shells and 1 mass part of pea bran are added.

The materials in the mixer are mixed to a homogenous mixture then tablets are pressed from it.

### Example 3

We proceed according to the Example 1 but 70 mass parts of rice bran is dosed and 3 mass parts of watery solution of carboxy-methyl cellulose of 5 mass% is added.

The materials are mixed then 0.5 mass parts of ground dried sugar-pea shells and 8 mass parts of pea bran are added.

The content of the mixer is formed to a homogenous mixture then tablets are pressed from it.

The surfaces of the tablets are coated with a methacrylic acid derivative polymer coating.

### Example 4

All is done according to the Example 1, but the mixture is packed into hard gelatin capsules.

### Example 5

70 mass parts of rice bran, 20 mass parts of ground dried marrow-fat pea shells and 2 mass parts of pea bran are dosed into an apparatus provided with mixer. 6.5 mass parts of milled grape-seeds, 0.5 mass parts of sesame-seed oil, 0.01 mass parts of vitamin E, 0.02 mass parts of vitamin B6 and 0.2 mass parts of calcium carbonate are added.

The materials are mixed in the mixer to a homogenous mixture then tablets are pressed from the mixture.

### Example 6

70 mass parts of rice bran, 20 mass parts of ground dried shells of shelled pea and 9.9 mass parts of pea bran are dosed into an apparatus provided with mixer. 0.05 mass parts of vitamin E and 0.05 mass parts of vitamin B6 are added. The materials are mixed in the mixer to a homogenous mixture then tablets are pressed from the mixture.

### Example 7 of efficiency

The course of the experiment:
The animals: 30 male Wistar rats of 200 to 300 grams.
The materials: rice bran, sodium glutamate, sodium glutamate marked with isotope C¹³, mixture according to the Example 1 and starch powder (as control molecules).

### Experiments performed on groups of animals:

1. 10 rats starved during 12 hours received
   800 mg of starch
   2 mg /g of mixture of sodium glutamate (a mixture of marked and unmarked molecules)
   in the morning through stomach probe
   in form of mixed watery pap:
      This is the "complete" control group.
2. 10 rats prepared in the similar way received:
   400 mg of rice bran
   400 mg of starch
   2 mg/g of mixture of sodium glutamate
   (a mixture of marked and unmarked molecules)

This is the "rice bran" control group
3. 10 rats prepared int he similar way received:
   400 mg of mixture according to the Example 1 containing 75 mass% of rice bran, 20 mass% of ground dried pea shells and 5 mass% of pea bran (mixture BHK),
   and 2 mg/g of mixture of sodium glutamate
   (a mixture of marked and unmarked molecules)

This is the "factual experimental" group.
Blood sample taking: Blood samples were taken from the abdominal aortas of all anesthetized animals in 2 hours after applying probe and the quantity of isotope C¹³ was measured in the blood serum samples.

During the evaluation we tested the ratio of reduction of the glutamate level marked with isotope C¹³ in the blood samples of the individual groups in comparison with that level of the control group (We took the glutamate level marked with isotope C¹³ of the control group as 100%).
The results are: Group 1: the average of C¹³ measurements: 100% (control group)
Group 2: the average of C¹³ measurements: 59% (group consuming rice bran)
Group 3: the average of C¹³ measurements: 37% (group consuming the mixture BHK according to the invention).
Our experiment demonstrated that less molecules of glutamate marked with isotope C¹³ get in the blood if the mixture according to the Example 1 without compressing into tablets is admixed to the food took in by stomach probe.

### Example 8 of efficiency

We did everything as in the Example 7 with the difference that the 3^{rd} group of the experimental animals received the preparation according to the Example 2, as described below:
The course of the experiment:
   The animals: 30 male Wistar rats of 200 to 300 grams.
   The materials: rice bran, sodium glutamate marked with C¹³, the mixture according to the Example 2 and starch powder (as control molecules).

### The experiences performed on the groups of animals:

1. 10 rats starved during 12 hours received
   800 mg of starch
   2 mg/g of sodium glutamate mixture (mixture of marked and unmarked molecules)
   in the morning through stomach probe,
   in form of mixed watery pap;
   This is the "complete" control group.
2. 10 similarly prepared rats received:
   400 mg of rice bran
   400 mg of starch
   2 mg/g of mixture of sodium glutamate (mixture of marked and unmarked molecules)
   This is the "rice bran" control group.
3. 10 similarly prepared rats received:
   400 mg of mixture according to the Example 2, containing 90 mass% of rice bran, 9 mass% of ground dried pea shells and 1 mass% of pea bran,
   2 mg/g of mixture of sodium glutamate (mixture of marked and unmarked molecules)

This is the "factual experimental" group.

Blood sample taking: Blood samples were taken from the abdominal aortas of all anesthetized animals in 2 hours after applying probe and the quantity of isotope C¹³ were measured in the serums.
The results: Group 1: The average of C¹³ measurements: 100% (control group),
Group 2: The average of C¹³ measurements: 58% (group consuming rice bran),
Group 3: The average of C¹³ measurement: 41% (group consuming the mixture according to the invention).
Our experiment demonstrated that less sodium glutamate molecules marked with isotope C¹³ got into blood if the mixture according to the Example 2 is admixed without compressing into tablets to the food inserted through probe and the reduction of glutamate level was greater than in the case of the Example 7.

### Example 9 of efficiency

We did all as in the Example 7 with the difference that the 3^{rd} group of the experimental animals received the preparation according to the Example 5 as described below:
The course of the experiment:
   The animals: 30 male Wistar rats of 200 to 300 grams.
   The materials: rice bran, sodium glutamate marked with isotope C¹³, the mixture according to the Example 5 and starch powder (as control molecules).

### The experiments performed on groups of animals:

1. 10 rats starved during 12 hours received
   800 mg of starch,
   2 mg /g of mixture of sodium glutamate (mixture of marked and unmarked molecules)
in the morning through stomach probe
in form of mixed watery pap:
   This is the "complete" control group
2. 10 similarly prepared rats received:
   400 mg of rice bran,
   400 mg of starch,
   2 mg/g of mixture of sodium glutamate (mixture of marked and unmarked molecules)
   This is the "rice bran" control group
3. 10 similarly prepared rats received:
   400 mg of the mixture according to the Example 5, containing
70 mass% of rice bran, 20 mass% of ground dried pea shells, 2 mass% of pea bran, 6.5 mass% of milled grape-seeds, 0.5 mass% of sesame seed oil, 0.01 mass% of vitamin E, 0.02 mass% of vitamin B6 and 0.2 mass% of calcium carbonate,
   2 mg/g of mixture of sodium glutamate (mixture of marked and unmarked molecules).

This is the "factual experimental" group. Blood sample taking: Blood samples were taken from the abdominal aortas of all anesthetized animals in 2 hours after applying the probe and the quantity of isotope C¹³ was measured in the serums.
The results: Group 1: The average of C¹³ measurements: 100% (control group)
Group 2: The average of C¹³ measurements: 9% (group consuming rice bran)
Group 3: The average of C¹³ measurements: 31 % (group consuming the mixture according to the invention).
Our experiment demonstrated that even less molecules of sodium glutamate marked with isotope C¹³ got into the blood if the mixture according to the Example 5 without compressing into tablets is admixed to the food taken in through probe and the reduction of the glutamate level was significantly greater than in the case of the Example 7.

### Example 10 of efficiency

We asked 8 healthy adult persons of average body mass having already observed the symptoms of "Chinese restaurant syndrome" in themselves to participate in our experiments. The members of the group ate the same Chinese food in the same quantity at the same time. 4 members of the group were randomly chosen and each of them consumed 25 grams of the preparation according to the Example 1 together with the food during the meal without knowing about that.

We asked the members of the group how they were in 2 hours after the meal. The undesired symptoms (reddening of skin, violent palpitation, temporary increase of blood pressure, headache and sweating, bad general sense of condition) unequivocally appeared in 3 persons from among those members of the group who did not receive the preparation according to the invention, while 1 person complained about bad general sense of condition without any perceptible symptom. Those people who took in the preparation according to the invention, in contrary, did not feel any symptom in themselves and their general sense of condition proved to be good without changing.

We repeated the experiment in a similar way a day after and got again the experience that the volunteers who took in the preparation did not feel symptoms in themselves, while those who did not take that in showed the usual symptoms in smaller or greater extent.

### Example 11 of efficiency

We asked 5 healthy adult persons of average body mass having slight complaints to stomach or intestines, which cannot be named as pathological (e. g. difficulties of digestion, feeling of continuously filled stomach, small appetite, torpid peristalsis etc.) since a longer time even with the conditions of regular lifestyle and usual nutrition, to consume the preparation according to the Example 2 of the invention regularly in doses of 30 g per day at least during 2 months.

After the expiration of 2 months, the participants of the experiment gave unequivocally account that their symptoms became slighter or ceased, their general state of health also improved and moreover they became less susceptible to the slighter infections occurring in the usual everyday life, as they experienced it formerly (corroborating effect).

### Example 12 of efficiency

We asked 9 healthy adult persons of average body mass who feel symptoms (reddening of skin, violent palpitation, temporary increase of blood pressure, headache, perspiration, bad general status of health) similar to those of "Chinese restaurant syndrome" from time to time but relatively often without any previous events even with the conditions of regular lifestyle and usual nutrition, to consume regularly the preparation according to the Example 5 of the invention and for a longer period of time. The participants consumed 20 g of the preparation according to the Example 5 every day during 3 months. Their symptoms became perceptibly rarer and slighter from the 3^{rd} or 4^{th} week after the beginning of the consumption then they practically disappeared after several further weeks. Their general state of health got explicitly better, the fluctuation of blood pressure ceased and they did not experienced groundless sweating, reddening of skin or violent palpitation any more.

## Claims

1. Nutritional supplementary composition with curative effect containing rice bran, **characterized in that** it contains 70.0 to 99.5 mass parts of rice bran, 0.1 to 25 mass parts of ground dried pea shells, 0.1 to 10 mass parts of pea bran, furthermore in given case 1 to 10 mass parts of milled grape-seeds and/or 0.1 to 1 mass parts of sesame seed oil and/or 0.5 to 1 mass parts of calcium carbonate and/or 0.01 to 0.05 mass parts of antioxidant, advantageously vitamin E and/or 0.01 to 0.05 mass parts of vitamin B6 and optionally binding, auxiliary and coating materials generally used in food industry.

2. Composition according to claim 1 for use in a method of mitigating or inhibiting symptoms caused by elevated sodium-glutamate in human beings.

## Patentansprüche

1. Eine Reiskleie enthaltende die Ernährung ergänzende Nährstoff-Zusammensetzung mit heilender Wirkung, damit gekennzeichnet dass sie 70,0 bis 99,5 Massenteile der Reiskleie, 0,1 bis 25 Massenteile der gedörrten Hülsen der Erbse, 0,1 bis 10 Massenteile der Kleie der Erbse, gegebenenfalls auch 1 bis 10 Massenteile der gemahlenen Weintraubensamen, und/oder 0,1 bis 1 Massenteile des Sesamsamenöls, und/oder 0,5 bis 1 Massenteile des Kalzium Karbonats und/oder 0,01 bis 0,05 Massenteile eines Antioxidans, vorzugsweise Vitamins E und/oder 0,01 bis 0,05 Massenteile des Vitamins B6 und wahlweise in der Nahrungsmittelindustrie üblichen Bindemittel, Hilfs- und Überzugmittel enthält.

2. Eine Zusammensetzung nach dem Anspruch 1 für Benutzung in einer Methode zur Milderung oder Hemmung der durch im menschlichen Organismus befindliche erhöhte Menge des Natriumglutamats verursachten Symptome.

## Revendications

1. Une composition nutrient supplémentaire ayante un effet curatif contenante son de riz **caractérisée par** qu'elle contient 70,0 à 99,5 parties de masse de son de riz, 0,1 à 25 parties de masse de coquille de pois séché et moulu, 0,1 à 10 parties de masse de son de pois, en plus dans un cas donné 1 à 10 parties de masse de graines de raisin moulu et/ou 0,1 à 1 parties de masse de huile de graines de sésame et/ou 0,5 à 1 parties de masse de calcium carbonate et/ou 0,01 à 0,05 parties de masse d'un antioxydant avantageusement vitamine E et/ou 0,01 à 0,05 parties de masse de vitamine B6 et materials liants, auxiliaires et couvrants utilisés ordinairement dans l'industrie alimentaire en option.

2. Une composition selon la revendication 1 à user dans une méthode pour l'atténuation ou inhibition des symptoms causés par contenu élevé de glutamate de soude dans l'êtres humains
